# EUROPEAN PATENT APPLICATION

(11) **EP 4 843 896 A1**
(43) Date of publication of application: **25.11.2026**
(21) Application number: 24918056.3
(22) Date of filing: 28.08.2024
(51) Int. Cl.: B64U 70/97, B64U 80/80, B64U 80/25

(54) **UNMANNED AERIAL VEHICLE HANGAR AND VEHICLE**

(30) Priority: 19.01.2024 CN 202410084321
(71) Applicant: BYD Company Limited, Shenzhen, Guangdong 518118 (CN)
(72) Inventor: ZHU, Liangyi, Shenzhen, Guangdong 518118 (CN); XIAO, Guanjia, Shenzhen, Guangdong 518118 (CN); ZHAO, Shenglei, Shenzhen, Guangdong 518118 (CN); WANG, Yan, Shenzhen, Guangdong 518118 (CN); WEN, Xiaoning, Shenzhen, Guangdong 518118 (CN)
(74) Representative: Mathys & Squire
(86) International application number: PCT/CN2024/115286
(87) International publication number: WO 2025/152447

(57) **Abstract**

Provided are an unmanned aerial vehicle hangar and a vehicle. An unmanned aerial vehicle hangar for receiving an unmanned aerial vehicle (1) includes: a first adjustment module (3) and a parking table (43). The parking table (43) is configured to park the unmanned aerial vehicle (1), the parking table (43) is disposed between a first sliding pad (38) and a second sliding pad (39), and the first adjustment module (3) is configured to support the unmanned aerial vehicle (1) and adjust the unmanned aerial vehicle (1) along a Y-axis direction, to adjust the unmanned aerial vehicle (1) to the middle of the parking table (43).

## Description

This application claims priority to Chinese Patent Application No. 202410084321.8, filed with the China National Intellectual Property Administration on January 19, 2024 and entitled "UNMANNED AERIAL VEHICLE HANGAR AND VEHICLE", which is incorporated herein by reference in its entirety.

### TECHNICAL FIELD

This application generally relates to the field of unmanned aerial vehicle technologies, and more specifically, to an unmanned aerial vehicle hangar and a vehicle.

### BACKGROUND

Currently, unmanned aerial vehicles are being used increasingly widely in industrial and daily-life fields, and development of corresponding supporting equipment has also received attention. To facilitate recovery of unmanned aerial vehicles, the prior art has provided unmanned aerial vehicle hangars. An unmanned aerial vehicle hangar is usually equipped with a lifting platform. An unmanned aerial vehicle lands on the lifting platform for storage, charging, and other subsequent operations.

### TECHNICAL PROBLEMS

Some existing lifting platforms are equipped with a centering mechanism that can adjust an unmanned aerial vehicle to the middle of the lifting platform. However, the centering mechanism has a complex structure, occupies a large space, and has a single function. The centering mechanism can only be used to adjust the position of the unmanned aerial vehicle and does not assist with landing of the unmanned aerial vehicle.

Therefore, there is a need to provide an unmanned aerial vehicle hangar and a vehicle to at least partially solve the foregoing problems.

### TECHNICAL SOLUTIONS

A series of concepts in a simplified form are introduced to the SUMMARY, which are further described in detail in the DESCRIPTION OF EMBODIMENTS. The SUMMARY of this application neither means an attempt to define a key feature and a necessary technical feature of the technical solutions claimed for protection, nor means an attempt to determine the protection scope of the technical solutions claimed for protection.

To at least partially solve the foregoing problems, a first aspect of this application provides an unmanned aerial vehicle hangar for receiving an unmanned aerial vehicle, including:
a first adjustment module, configured to support the unmanned aerial vehicle and capable of adjusting the unmanned aerial vehicle along a Y-axis direction, wherein the first adjustment module includes a first sliding pad and a second sliding pad; and
a parking table, configured to park the unmanned aerial vehicle, the parking table being disposed between the first sliding pad and the second sliding pad, wherein
the first sliding pad and the second sliding pad are capable of moving in the Y-axis direction synchronously with respect to the parking table, to adjust the unmanned aerial vehicle to a middle of the parking table.

Optionally, the first sliding pad and the second sliding pad are disposed below the parking table, and are capable of moving along the Y-axis direction below the parking table.

Optionally, heights of the first sliding pad and the second sliding pad with respect to the parking table are different, to avoid interference between the first sliding pad and the second sliding pad during movement.

Optionally, the parking table includes: a first guide surface and a second guide surface, the first guide surface and the second guide surface being disposed on both sides of the parking table, the first guide surface being close to the first sliding pad, the second guide surface being close to the second sliding pad, the first guide surface and the second guide surface being arranged as inclined planes, heights of which gradually decrease toward two sides of the parking table.

Optionally, the unmanned aerial vehicle hangar further includes:
a base, wherein the first adjustment module is disposed on a top of the base.

Optionally, the first adjustment module further includes:
a first side base, disposed on one side of the base along an X-axis direction, wherein the first sliding pad and the second sliding pad are slidably disposed on the first side base; and
a second side base, disposed on the other side of the base along an X-axis direction, wherein the first sliding pad and the second sliding pad are slidably disposed on the second side base; and
two ends of the parking table along the X-axis direction are respectively fastened to the first side base and the second side base.

Optionally, a first guide groove and a second guide groove are provided on an inner side of the first side base, and a third guide groove and a fourth guide groove are provided on an inner side of the second side base; and the first guide groove and the third guide groove are arranged to correspond to each other, and the second guide groove and the fourth guide groove are arranged to correspond to each other; and
two side edges of the first sliding pad are in slidable cooperation with the first guide groove and the third guide groove, respectively, and two side edges of the second sliding pad are in slidable cooperation with the second guide groove and the fourth guide groove, respectively.

Optionally, a first mounting groove is provided on the top of the base, and the first mounting groove is provided along the Y-axis direction; and
the first adjustment module further includes a first guide rail module, and the first guide rail module is disposed in the first mounting groove, and is configured to guide sliding of the first sliding pad and the second sliding pad.

Optionally, the first adjustment module further includes:
a first drive module, wherein the first drive module is drivingly connected to both the first sliding pad and the second sliding pad, and is capable of driving the first sliding pad and the second sliding pad to move synchronously along the Y-axis direction with respect to the parking table.

Optionally, the first drive module includes:
a first drive apparatus, disposed on the top of the base and located in a middle of the first mounting groove; and
a first lead screw, drivingly connected to the first drive apparatus, wherein the first lead screw includes a first drive rod and a second drive rod, with thread directions of the first drive rod and the second drive rod being opposite.

The first guide rail module includes a first guide rail and a second guide rail, the first guide rail and the second guide rail being distributed on both sides of the first drive apparatus along the Y-axis direction, the first guide rail being arranged to correspond to the first drive rod, and the second guide rail being arranged to correspond to the second drive rod.

Optionally, the first drive module further includes:
a first slider, wherein the first slider is disposed on the first guide rail and is capable of sliding along the first guide rail, and the first slider is connected to the first sliding pad; and
a second slider, wherein the second slider is disposed on the second guide rail and is capable of sliding along the second guide rail, and the second slider is connected to the second sliding pad.

Optionally, the first slider is provided with a first threaded hole, and is connected to the first drive rod of the first lead screw through the first threaded hole;
the second slider is provided with a second threaded hole, and is connected to the second drive rod of the first lead screw through the second threaded hole; and
thread directions of the first threaded hole and the second threaded hole are opposite.

Optionally, the first sliding pad is provided with a first protruding edge, and the first protruding edge pushes the unmanned aerial vehicle to move or limit the unmanned aerial vehicle.

The second sliding pad is provided with a second protruding edge, and the second protruding edge pushes the unmanned aerial vehicle to move or limit the unmanned aerial vehicle.

Optionally, the unmanned aerial vehicle hangar further includes:
a second adjustment module, configured to adjust the unmanned aerial vehicle along an X-axis direction, wherein the second adjustment module is capable of holding the unmanned aerial vehicle on the parking table, and the second adjustment module is disposed on a top of the parking table; and
the second adjustment module includes a third slider and a fourth slider, wherein the third slider and the fourth slider are capable of moving synchronously along the X-axis direction with respect to the parking table.

Optionally, a second mounting groove is provided on the top of the parking table, and the second mounting groove is disposed along the X-axis direction; and
the second adjustment module further includes a second guide rail module, and the second guide rail module is disposed in the second mounting groove.

Optionally, the second adjustment module further includes:
a second drive module, wherein the second drive module is drivingly connected to both the third slider and the fourth slider, and is capable of driving the third slider and the fourth slider to move synchronously along the X-axis direction with respect to the parking table.

Optionally, the second adjustment module further includes:
a second drive apparatus, wherein the second drive apparatus is disposed on one side of the parking table; and
a second lead screw, drivingly connected to the second drive apparatus, wherein the second lead screw includes a third drive rod and a fourth drive rod, with thread directions of the third drive rod and the fourth drive rod being opposite.

The second guide rail module includes a third guide rail and a fourth guide rail, the third guide rail and the fourth guide rail are distributed along the X-axis direction, the third guide rail is arranged to correspond to the third drive rod, and the fourth guide rail is arranged to correspond to the fourth drive rod.

Optionally, the third slider is disposed on the third guide rail, and is capable of sliding along the third guide rail; and
the fourth slider is disposed on the fourth guide rail, and is capable of sliding along the fourth guide rail.

Optionally, the third slider is provided with a third threaded hole, and is connected to the third drive rod of the second lead screw through the third threaded hole;
the fourth slider is provided with a fourth threaded hole, and is connected to the fourth drive rod of the second lead screw through the fourth threaded hole; and
thread directions of the third threaded hole and the fourth threaded hole are opposite.

Optionally, a top of the third slider is provided with a plurality of first protrusions, wherein the first protrusion is configured to fold a propeller blade of the unmanned aerial vehicle; and
a top of the fourth slider is provided with a plurality of second protrusions, wherein the second protrusion is configured to fold a propeller blade of the unmanned aerial vehicle.

Optionally, an end of the third slider is provided with a first charging terminal configured to electrically connect to a charging port of the unmanned aerial vehicle for charging; and/or
an end of the fourth slider is provided with a second charging terminal configured to electrically connect to the charging port of the unmanned aerial vehicle for charging.

Optionally, the second adjustment module further includes:
a cover, wherein the cover is disposed at a top of the second mounting groove to cover an opening of the second mounting groove.

Optionally, a first sliding groove is provided on the third slider, and the first sliding groove is in slidable cooperation with the cover; and
a second sliding groove is provided on the fourth slider, and the second sliding groove is in slidable cooperation with the cover.

A second aspect of this application provides a vehicle, including the unmanned aerial vehicle hangar according to any of the foregoing described technical solutions.

### BENEFICIAL EFFECTS

According to the unmanned aerial vehicle hangar and the vehicle in this application, the first sliding pad and the second sliding pad that can support and adjust the position of the unmanned aerial vehicle are provided. In this way, when the first sliding pad and the second sliding pad are extended, which is equivalent to expansion of an area supporting the unmanned aerial vehicle, landing of the unmanned aerial vehicle is facilitated, helping the unmanned aerial vehicle to land on the unmanned aerial vehicle hangar. After the unmanned aerial vehicle lands, the first sliding pad and the second sliding pad move relative to each other, to adjust the position of the unmanned aerial vehicle in the unmanned aerial vehicle hangar and center the unmanned aerial vehicle while reducing the originally expanded area, so as to ultimately reduce size of the unmanned aerial vehicle hangar.

### BRIEF DESCRIPTION OF DRAWINGS

The following accompanying drawings for implementations of this application are included herein as part of this application for understanding this application. The accompanying drawings illustrate and describe implementations of this application, and are used to explain principles of this application. In the drawings:
FIG. 1 is a front view of an unmanned aerial vehicle hangar according to an exemplary embodiment of this application;
FIG. 2 is a top view of an unmanned aerial vehicle hangar according to an exemplary embodiment of this application;
FIG. 3 is a bottom view of an unmanned aerial vehicle hangar according to an exemplary embodiment of this application, with no base included in the figure;
FIG. 4 is a right view of an unmanned aerial vehicle hangar according to an exemplary embodiment of this application;
FIG. 5 is a three-dimensional diagram of an unmanned aerial vehicle hangar according to an exemplary embodiment of this application;
FIG. 6 is an exploded view of an unmanned aerial vehicle hangar according to an exemplary embodiment of this application;
FIG. 7 is a three-dimensional diagram of a base, a first drive apparatus, and a second drive apparatus of an unmanned aerial vehicle hangar in combined state according to an exemplary embodiment of this application;
FIG. 8a is a three-dimensional diagram of a first adjustment module of an unmanned aerial vehicle hangar according to an exemplary embodiment of this application, in which the first adjustment module is in an extended state;
FIG. 8b is a three-dimensional diagram of a first adjustment module of an unmanned aerial vehicle hangar according to an exemplary embodiment of this application, in which the first adjustment module is in a retracted state;
FIG. 9a is a three-dimensional diagram of a second adjustment module of an unmanned aerial vehicle hangar according to an exemplary embodiment of this application, in which a first adjustment module is in an extended state;
FIG. 9b is a three-dimensional diagram of a second adjustment module of an unmanned aerial vehicle hangar according to an exemplary embodiment of this application, in which a first adjustment module is in a retracted state;
FIG. 10a is a three-dimensional diagram of an unmanned aerial vehicle hangar in a using state according to an exemplary embodiment of this application;
FIG. 10b is a three-dimensional diagram of an unmanned aerial vehicle hangar in a using state according to an exemplary embodiment of this application;
FIG. 10c is a three-dimensional diagram of an unmanned aerial vehicle hangar in a using state according to an exemplary embodiment of this application;
FIG. 11a is a three-dimensional diagram of an unmanned aerial vehicle in a parked state according to an exemplary embodiment of this application, in which propeller blades of the unmanned aerial vehicle are in an extended state;
FIG. 11b is a three-dimensional diagram of an unmanned aerial vehicle in a parked state according to an exemplary embodiment of this application, in which propeller blades of the unmanned aerial vehicle are in a retracted state;
FIG. 12 is a three-dimensional diagram of an unmanned aerial vehicle according to an exemplary embodiment of this application; and
FIG. 13 is a three-dimensional diagram of a fourth slider according to an exemplary embodiment of this application.

**Reference numerals:**

| | | | |
|---|---|---|---|
| 1: | unmanned aerial vehicle | 11: | body |
| 12: | arm | 13: | motor |
| 14: | propeller blade | 15: | charging port |
| 16: | camera | 2: | base |
| 21: | base body | 22: | first mounting groove |
| 3: | first adjustment module | 31: | first drive apparatus |
| 32: | first lead screw; | 321: | first drive rod |
| 322: | second drive rod; | 33: | first guide rail module |
| 331: | first guide rail; | 332: | second guide rail |
| 34: | first slider | 341: | slider body |
| 342: | first threaded hole; | 343 : | first connecting groove |
| 35: | second slider | 351 : | slider body |
| 352: | second threaded hole; | 353 : | second connecting groove |
| 36: | first side base; | 361 : | first guide groove |
| 362: | second guide groove; | 37: | second side base |
| 371: | third guide groove; | 372: | fourth guide groove |
| 38: | first sliding pad; | 381: | pad body |
| 382: | first protruding edge; | 39: | second sliding pad |
| 391: | pad body; | 392: | second protruding edge |
| 4: | second adjustment module | 41: | second drive apparatus |
| 42: | second lead screw; | 421: | third drive rod |
| 422: | fourth drive rod; | 43: | parking table |
| 431: | second mounting groove; | 432: | first guide surface |
| 433: | second guide surface; | 44: | cover |
| 45: | third slider | 454: | first protrusion |
| 46: | fourth slider | 461: | slider body |
| 463: | second sliding groove; | 464: | second protrusion |
| 465: | second charging terminal; | 47: | second guide rail module |
| 471: | third guide rail; | 472: | fourth guide rail |
| 453: | first sliding groove | | |

### DESCRIPTION OF EMBODIMENTS

In the following descriptions, a lot of specific details are given to provide a more thorough understanding of this application. However, it is apparent to those skilled in the art that this application can be implemented without one or more of these details. In other examples, to avoid confusion with this application, some technical features known in the art are not described.

For a thorough understanding of this application, detailed descriptions are provided in the following descriptions. It will be understood that these embodiments are provided so that the disclosure of this application is thorough and complete, and that the concept of these exemplary embodiments is fully conveyed to those skilled in the art. Clearly, implementation of embodiments of this application is not limited to special details familiar to those skilled in the art. Exemplary embodiments of this application are described in detail below; however, in addition to these detailed descriptions, this application may have other embodiments.

The ordinal numbers such as "first" and "second" used in this application are merely identifiers and have no other meaning, such as a specific order. In addition, for example, the term "first component" does not imply presence of a "second component", and the term "second component" does not imply presence of a "first component".

It will be noted that the terms "above", "below", "front", "back", "left", "right", "inner", "outer", and similar descriptions in this application are merely for description purposes, but are not intended to limit this application.

This application discloses an unmanned aerial vehicle hangar and a vehicle.

Exemplary embodiments of this application are now described in more detail with reference to the accompanying drawings.

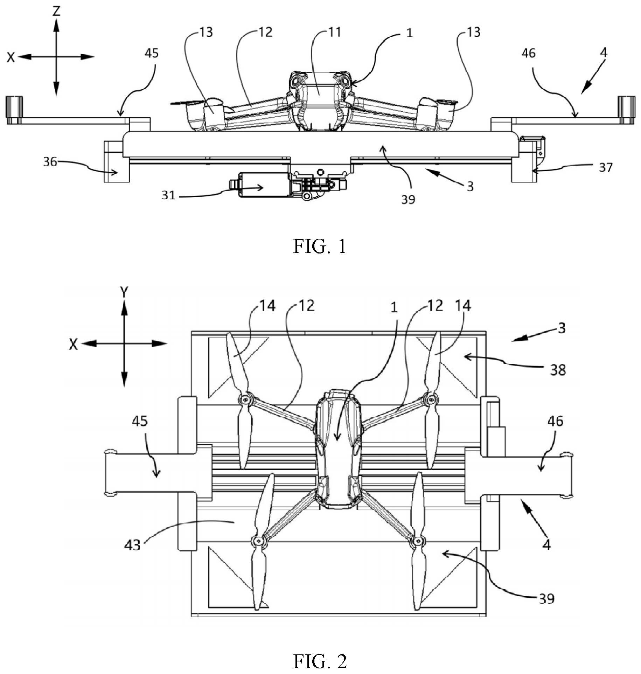

As shown in FIG. 1, FIG. 2, and FIG. 3, in an exemplary embodiment, an unmanned aerial vehicle hangar for receiving an unmanned aerial vehicle 1 includes: a first adjustment module 3 and a parking table 43.

The first adjustment module 3 is configured to support the unmanned aerial vehicle 1 and is capable of adjusting the unmanned aerial vehicle 1 along a Y-axis direction. The first adjustment module 3 includes a first sliding pad 38 and a second sliding pad 39. The first adjustment module 3 can adjust the unmanned aerial vehicle 1 along two directions of the Y-axis.

The parking table 43 is used to park the unmanned aerial vehicle 1. The parking table 43 is disposed between the first sliding pad 38 and the second sliding pad 39. During a landing process of the unmanned aerial vehicle 1, the parking table 43, together with the first sliding pad 38 or the second sliding pad 39, can support the unmanned aerial vehicle 1.

The first sliding pad 38 and the second sliding pad 39 are capable of moving in the Y-axis direction synchronously with respect to the parking table 43, to adjust the unmanned aerial vehicle 1 to the middle of the parking table 43.

When landing on the parking table 43, the unmanned aerial vehicle 1 usually cannot land exactly in the middle of the parking table 43, and may be closer to the first sliding pad 38 or the second sliding pad 39. In this case, a position of the unmanned aerial vehicle 1 needs to be adjusted through the first sliding pad 38 and the second sliding pad 39. Because an arm 12 or a landing gear of the unmanned aerial vehicle 1 may come into contact with the first sliding pad 38 or the second sliding pad 39, movement of the first sliding pad 38 or the second sliding pad 39 can drive the unmanned aerial vehicle 1 to move.

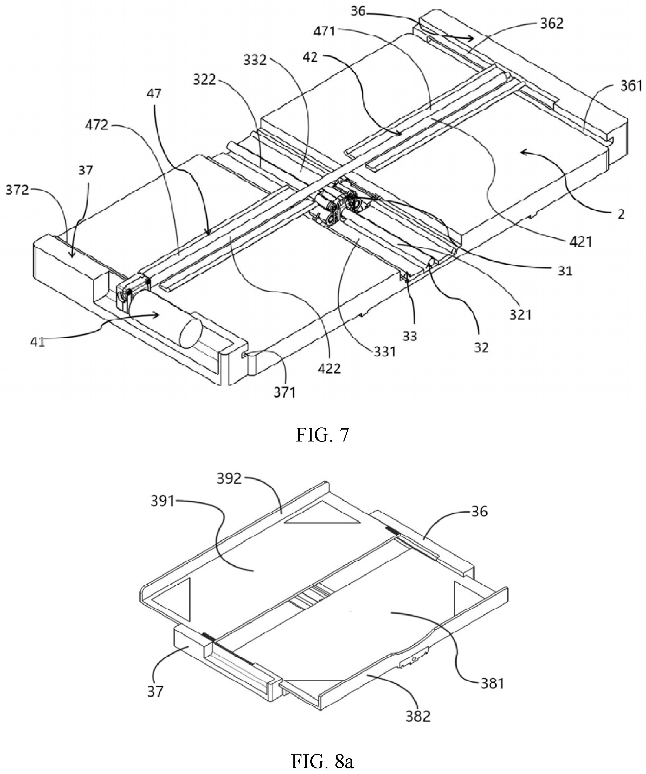

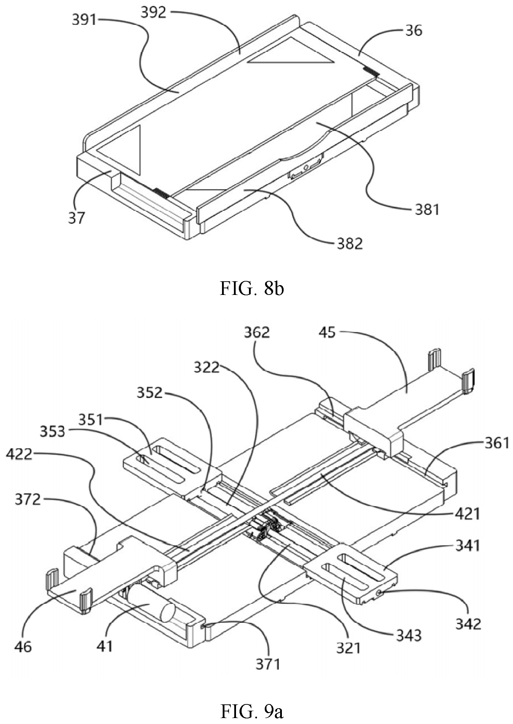

Before the unmanned aerial vehicle 1 lands, the first sliding pad 38 and the second sliding pad 39 are in an extended state. After the unmanned aerial vehicle 1 lands, when the first sliding pad 38 and the second sliding pad 39 move synchronously toward the parking table 43, the unmanned aerial vehicle 1 can be gradually adjusted to the middle of the parking table 43 along the Y-axis direction. After the unmanned aerial vehicle 1 is centered along the Y-axis direction, the first sliding pad 38 and the second sliding pad 39 are in a retracted state. For extended and retracted states of the first sliding pad 38 and the second sliding pad 39, reference is made to FIG. 8a and FIG. 8b.

In the unmanned aerial vehicle hangar in this embodiment, the first sliding pad and the second sliding pad that can support and adjust the position of the unmanned aerial vehicle are provided. In this way, when the first sliding pad and the second sliding pad are extended, which is equivalent to expansion of an area supporting the unmanned aerial vehicle, landing of the unmanned aerial vehicle is facilitated, helping the unmanned aerial vehicle to land on the unmanned aerial vehicle hangar. After the unmanned aerial vehicle lands, the first sliding pad and the second sliding pad move relative to each other, to adjust the position of the unmanned aerial vehicle in the unmanned aerial vehicle hangar and center the unmanned aerial vehicle while reducing the originally expanded area, so as to ultimately reduce size of the unmanned aerial vehicle hangar.

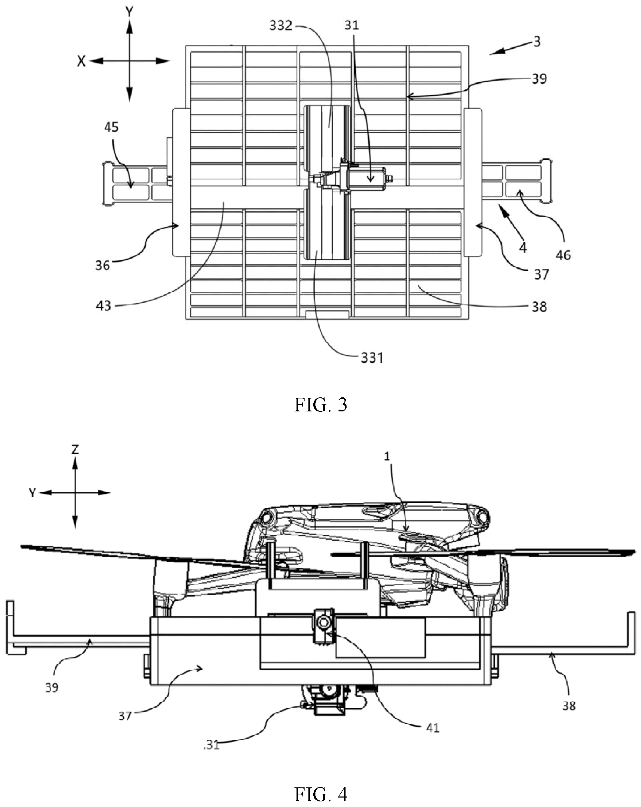

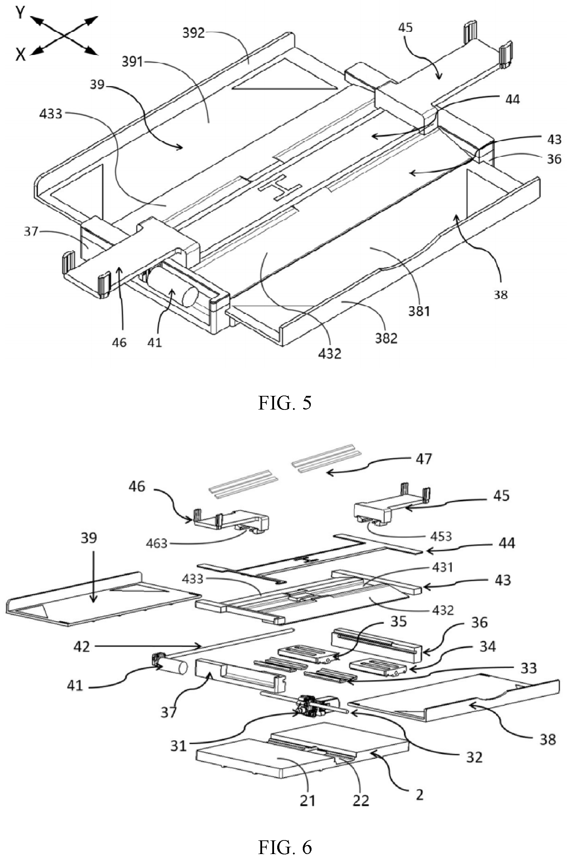

In one implementation, as shown in FIG. 4 and FIG. 5, the first sliding pad 38 and the second sliding pad 39 are disposed below the parking table 43 and are capable of moving along the Y-axis direction below the parking table 43.

The first sliding pad 38 and the second sliding pad 39 are disposed below the parking table 43, so that the parking table 43 becomes a main support component of the unmanned aerial vehicle 1, and the first sliding pad 38 and the second sliding pad 39 become auxiliary support components of the unmanned aerial vehicle 1. After the unmanned aerial vehicle 1 is centered, it also rests on the parking table 43. Moreover, when the first sliding pad 38 and the second sliding pad 39 move synchronously toward the parking table 43, the first sliding pad 38 and the second sliding pad 39 can gradually retract to a position below the parking table 43 without occupying too much space, so as to ultimately reduce the volume of the unmanned aerial vehicle hangar.

To improve structural strength of the first sliding pad 38 and the second sliding pad 39, reinforcing ribs can be provided on bottom surfaces of the first sliding pad 38 and the second sliding pad 39. The reinforcing ribs can be provided as strips or meshes.

In one implementation, as shown in FIG. 4, the first sliding pad 38 and the second sliding pad 39 are at different heights relative to the parking table 43 to avoid interference between the first sliding pad 38 and the second sliding pad 39 during movement.

In the figure, the first sliding pad 38 is slightly lower than the second sliding pad 39. When there is a height difference between the first sliding pad 38 and the second sliding pad 39, they can be gradually retracted to the bottom of the parking table 43 in a stacked state, reducing the space occupied. In this way, an area of the parking table 43 only needs to be greater than one of the sliding pads (areas of the first sliding pad 38 and the second sliding pad 39 may be equal). If the first sliding pad 38 and the second sliding pad 39 do not have a height difference, although they can be configured to be retracted to a position below the parking table 43, the area of the parking table 43 needs to be configured to be greater than a sum of the areas of the first sliding pad 38 and the second sliding pad 39.

In one implementation, as shown in FIG. 5 and FIG. 6, the parking table 43 includes a first guide surface 432 and a second guide surface 433. The first guide surface 432 and the second guide surface 433 are disposed on both sides of the parking table 43. The first guide surface 432 is close to the first sliding pad 38, and the second guide surface 433 is close to the second sliding pad 39. The first guide surface 432 and the second guide surface 433 are provided as inclined planes, heights of which gradually decrease toward two sides of the parking table 43.

The first guide surface 432 and the second guide surface 433 are provided as inclined planes, and when the first sliding pad 38 and the second sliding pad 39 move the unmanned aerial vehicle 1 toward the middle of the parking table 43, an edge of the parking table 43 does not obstruct the unmanned aerial vehicle 1, making it easier to move the unmanned aerial vehicle 1 to the middle of the parking table 43. After being centered, the unmanned aerial vehicle 1 mainly relies on its landing gear to rest in the middle of the parking table 43, and does not rest on the first guide surface 432 or the second guide surface 433. In this case, the first guide surface 432 and the second guide surface 433 do not cause the unmanned aerial vehicle 1 to tilt.

In one implementation, as shown in FIG. 5, FIG. 6, and FIG. 7, the unmanned aerial vehicle hangar further includes:
a base 2, where the first adjustment module 3 is disposed on the top of the base 2. The base 2 is a main supporting component of the unmanned aerial vehicle hangar, used for mounting of other components. The unmanned aerial vehicle hangar may be fixed to the top of a vehicle or ship via the base 2. To improve structural strength of the base 2, reinforcing ribs can be provided on a bottom surface of the base 2. The reinforcing ribs can be provided as strips or mesh.

In one implementation, as shown in FIG. 5 and FIG. 6, the first adjustment module 3 further includes:
a first side base 36, disposed on one side of the base 2 along an X-axis direction, where the first sliding pad 38 and the second sliding pad 39 are slidably disposed on the first side base 36; and
a second side base 37, disposed on the other side of the base 2 along an X-axis direction, where the first sliding pad 38 and the second sliding pad 39 are slidably disposed on the second side base 37.

The Y-axis and X-axis directions are perpendicular to each other. Length directions of the first side base 36 and the second side base 37 are still provided along the Y-axis direction, to support movement of the first sliding pad 38 and the second sliding pad 39.

Two ends of the parking table 43 along the X-axis direction are respectively fastened to the first side base 36 and the second side base 37. Preferably, the two ends may be disposed on the top of the first side base 36 and the second side base 37. The first side base 36 and the second side base 37 suspend the parking table 43, thereby leaving a space between the parking table 43 and the base 2 for the first sliding pad 38 and the second sliding pad 39 to move synchronously along the Y-axis direction with respect to the parking table 43.

In one implementation, as shown in FIG. 7, a first guide groove 361 and a second guide groove 362 are provided on an inner side of the first side base 36, and a third guide groove 371 and a fourth guide groove 372 are provided on an inner side of the second side base 37. The first guide groove 361 and the third guide groove 371 are arranged to correspond to each other, and the second guide groove 362 and the fourth guide groove 372 are arranged to correspond to each other.

Two side edges of the first sliding pad 38 are in slidable cooperation with the first guide groove 361 and the third guide groove 371, respectively, and two side edges of the second sliding pad 39 are in slidable cooperation with the second guide groove 362 and the fourth guide groove 372, respectively.

In the figure, a height of the first guide groove 361 is slightly lower than that of the second guide groove 362, and a height of the third guide groove 371 is slightly lower than that of the fourth guide groove 372, such that a height of the first sliding pad 38 is slightly lower than that of the second sliding pad 39. The first guide groove 361 and the third guide groove 371 are at the same height, and the second guide groove 362 and the fourth guide groove 372 are at the same height, so that the first sliding pad 38 and the second sliding pad 39 can both be kept parallel to the base 2. If the base 2 is in a horizontal state, the first sliding pad 38 and the second sliding pad 39 are both in a horizontal state.

In one implementation, as shown in FIG. 6 and FIG. 7, a first mounting groove 22 is provided on the top of the base 2, and the first mounting groove 22 is provided along the Y-axis direction.

The first adjustment module 3 further includes a first guide rail module 33, and the first guide rail module 33 is disposed in the first mounting groove 22 and is configured to guide sliding of the first sliding pad 38 and the second sliding pad 39.

The first mounting groove 22 is located in the middle of the base 2. The first mounting groove 22 is provided, so that the first guide rail module 33 can be prevented from protruding from the top of the base 2, thereby minimizing a height of the unmanned aerial vehicle hangar.

In one implementation, the first adjustment module 3 further includes:
a first drive module, where the first drive module is drivingly connected to both the first sliding pad 38 and the second sliding pad 39, and is capable of driving the first sliding pad 38 and the second sliding pad 39 to move synchronously along the Y-axis direction with respect to the parking table 43.

In one implementation, the first drive module includes:
a first drive apparatus 31, disposed on the top of the base 2 and located in the middle of the first mounting groove 22; and
a first lead screw 32, drivingly connected to the first drive apparatus 31, where the first lead screw 32 includes a first drive rod 321 and a second drive rod 322, with thread directions of the first drive rod 321 and the second drive rod 322 being opposite.

The first guide rail module 33 includes a first guide rail 331 and a second guide rail 332. The first guide rail 331 and the second guide rail 332 are distributed on both sides of the first drive apparatus 31 along the Y-axis direction. The first guide rail 331 is arranged to correspond to the first drive rod 321, and the second guide rail 332 is arranged to correspond to the second drive rod 322.

The first drive apparatus 31 may include a motor and a reducer, the motor and the reducer are drivingly connected, to drive the first lead screw 32 by using the reducer. The first lead screw 32 is configured to drive the first sliding pad 38 and the second sliding pad 39 to move synchronously, and can be directly connected to the first sliding pad 38 and the second sliding pad 39 or indirectly connected to the first sliding pad 38 and the second sliding pad 39.

The first drive rod 321 and the second drive rod 322 are integrated and can rotate synchronously, or fixedly connected and can rotate synchronously, or separate but can rotate synchronously. Therefore, through arrangement of the first drive rod 321 and the second drive rod 322 that have opposite thread directions, when the first lead screw 32 rotates, the first sliding pad 38 and the second sliding pad 39 may be driven to move simultaneously toward the parking table 43, or simultaneously away from the parking table 43, as shown in FIG. 8a and FIG. 8b. When the first lead screw 32 rotates clockwise (or counterclockwise), the first sliding pad 38 and the second sliding pad 39 may be extended synchronously, or when the first lead screw 32 rotates counterclockwise (or clockwise), the first sliding pad 38 and the second sliding pad 39 may be retracted synchronously.

Preferably, the first drive rod 321 and the second drive rod 322 are integrated; because a single lead screw connecting two sliders can ensure that the two sliders travel the same distance when the lead screw rotates, thereby ensuring accuracy of slider movement.

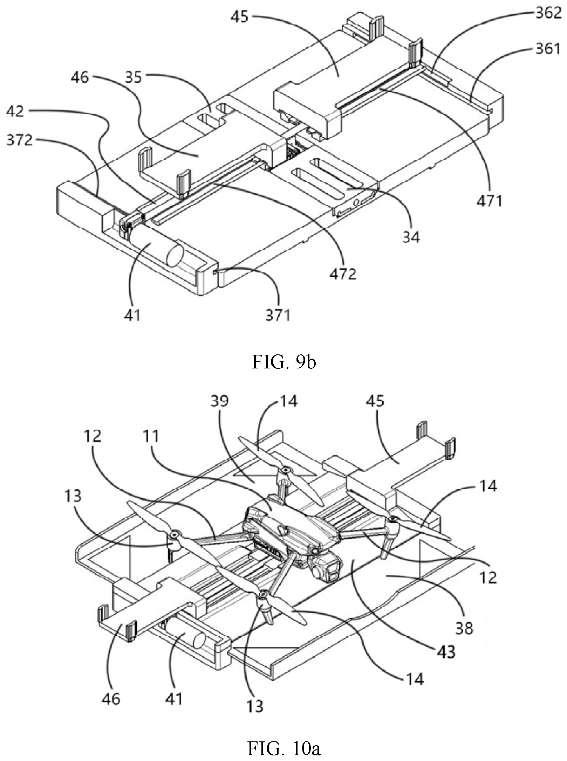

In one implementation, as shown in FIG. 9a and FIG. 9b, the first drive module further includes:
a first slider 34, where the first slider 34 is disposed on the first guide rail 331 and is capable of sliding along the first guide rail 331, and the first slider 34 is connected to the first sliding pad 38; and
a second slider 35, where the second slider 35 is disposed on the second guide rail 332 and is capable of sliding along the second guide rail 332, and the second slider 35 is connected to the second sliding pad 39.

Because areas of the first sliding pad 38 and the second sliding pad 39 are relatively large compared to those of other components, the first slider 34 and the second slider 35 are provided to facilitate connection and cooperation with the first guide rail 331 and the second guide rail 332. The first slider 34 is provided with a first connecting groove 343 for connecting to the first sliding pad 38. The first sliding pad 38 may be fastened by a bolt in the first connecting groove 343. The second slider 35 is provided with a second connecting groove 353 for connecting to the second sliding pad 39. The second sliding pad 39 may be fastened by a bolt in the second connecting groove 353.

A bottom shape of the first slider 34 needs to correspond to the first guide rail 331. For example, convex and concave shapes correspond to each other to form an engaging structure, so that the bottom of the first slider 34 is in slidable cooperation with the first guide rail 331 and cannot be arbitrarily detached from the first guide rail 331. A bottom shape of the second slider 35 needs to correspond to the second guide rail 332. For example, convex and concave shapes correspond to each other to form an engaging structure, so that the bottom of the second slider 35 is in slidable cooperation with the second guide rail 332 and cannot be arbitrarily detached from the second guide rail 332.

In one implementation, as shown in FIG. 9a and FIG. 9b, the first slider 34 is provided with a first threaded hole 342, and is connected to the first drive rod 321 of the first lead screw 32 through the first threaded hole 342; and
the second slider 35 is provided with a second threaded hole 352, and is connected to the second drive rod 322 of the first lead screw 32 through the second threaded hole 352.

If the first drive rod 321 and the second drive rod 322 are configured with opposite thread directions, the first threaded hole 342 and the second threaded hole 352 also need to be configured with opposite thread directions. A diameter of the first threaded hole 342 needs to be less than a thickness of the first slider 34, and a diameter of the second threaded hole 352 needs to be less than a thickness of the second slider 35.

In one implementation, as shown in FIG. 8a and FIG. 8b, the first sliding pad 38 is provided with a first protruding edge 382, and the first protruding edge 382 pushes the unmanned aerial vehicle 1 to move or limit the unmanned aerial vehicle 1; and
the second sliding pad 39 is provided with a second protruding edge 392, and the second protruding edge 392 pushes the unmanned aerial vehicle 1 to move or limit the unmanned aerial vehicle 1.

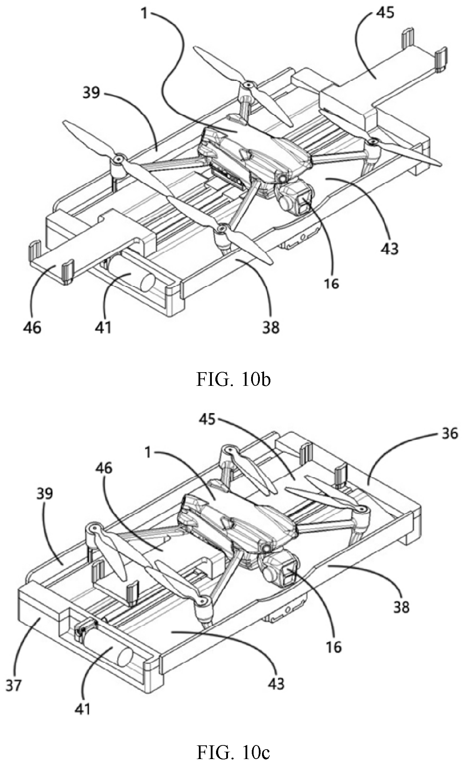

As shown in FIG. 10a, FIG. 10b, and FIG. 10c, the first protruding edge 382 is disposed on an outermost side of a pad body 381, and the second protruding edge 392 is disposed on an outermost side of a pad body 391. The first protruding edge 382 or the second protruding edge 392 may be in contact with the landing gear or the motor 13 of the unmanned aerial vehicle 1. When the first sliding pad 38 and the second sliding pad 39 move synchronously toward the parking table 43, the first protruding edge 382 or the second protruding edge 392 can push the unmanned aerial vehicle 1 to move. After the unmanned aerial vehicle 1 is centered, the first protruding edge 382 and the second protruding edge 392 can limit the unmanned aerial vehicle 1 to prevent the unmanned aerial vehicle 1 from falling off the parking table 43.

If a structure of a body 11 of the unmanned aerial vehicle 1 is complex, for example, has a protruding camera 16, the first protruding edge 382 or the second protruding edge 392 may be provided with a notch to provide clearance for the camera 16.

In one implementation, as shown in FIG. 1, FIG. 2, and FIG. 3, the unmanned aerial vehicle hangar further includes:
a second adjustment module 4, configured to adjust the unmanned aerial vehicle 1 along the X-axis direction, where the Y-axis direction is perpendicular to the X-axis direction. The second adjustment module 4 can hold the unmanned aerial vehicle 1 on the parking table 43. The second adjustment module 4 is disposed on the top of the parking table 43.

The second adjustment module 4 includes a third slider 45 and a fourth slider 46, where the third slider 45 and the fourth slider 46 are capable of moving synchronously along the X-axis direction with respect to the parking table 43.

The second adjustment module 4 can adjust the unmanned aerial vehicle 1 along two directions of the X-axis, to center the unmanned aerial vehicle along the X-axis direction. After the unmanned aerial vehicle 1 is centered, the second adjustment module 4 can also hold the unmanned aerial vehicle 1 on the parking table 43 along the X-axis direction.

In one implementation, as shown in FIG. 6 and FIG. 7, a second mounting groove 431 is provided on the top of the parking table 43, and the second mounting groove 431 is disposed along the X-axis direction.

The second adjustment module 4 further includes a second guide rail module 47, and the second guide rail module 47 is disposed in the second mounting groove 431 and is configured to guide sliding of the third slider 45 and the fourth slider 46.

The second mounting groove 431 is located at the top of the parking table 43. Through arrangement of the second mounting groove 431, the second guide rail module 47 can be prevented from protruding from the top of the parking table 43, thereby minimizing the height of the unmanned aerial vehicle hangar.

In one implementation, as shown in FIG. 6 and FIG. 7, the second adjustment module 4 further includes:
a second drive module, where the second drive module is drivingly connected to both the third slider 45 and the fourth slider 46, and is capable of driving the third slider 45 and the fourth slider 46 to move synchronously along the X-axis direction with respect to the parking table 43.

In one implementation, the second drive module includes:
a second drive apparatus 41, where the second drive apparatus 41 is disposed on one side of the parking table 43; and
a second lead screw 42, drivingly connected to the second drive apparatus 41, where the second lead screw 42 includes a third drive rod 421 and a fourth drive rod 422, with thread directions of the third drive rod 421 and the fourth drive rod 422 being opposite.

The second guide rail module 47 includes a third guide rail 471 and a fourth guide rail 472. The third guide rail 471 and the fourth guide rail 472 are distributed along the X-axis direction. The third guide rail 471 is arranged to correspond to the third drive rod 421, and the fourth guide rail 472 is arranged to correspond to the fourth drive rod 422.

The second drive apparatus 41 may be mounted on the second side base 37, and the second side base 37 is correspondingly provided with a mounting groove, to prevent the second drive apparatus 41 from protruding from the second side base 37.

The second drive apparatus 41 may include a motor and a reducer, the motor and the reducer are drivingly connected, to drive the second lead screw 42 by using the reducer. The second lead screw 42 is configured to drive the third slider 45 and the fourth slider 46 to move synchronously, and may be directly connected to the third slider 45 and the fourth slider 46 or indirectly connected to the third slider 45 and the fourth slider 46.

The third drive rod 421 and the fourth drive rod 422 are integrated and can rotate synchronously, or fixedly connected and can rotate synchronously, or separate but can rotate synchronously. Therefore, through arrangement of the third drive rod 421 and the fourth drive rod 422 that have opposite thread directions, when the second lead screw 42 rotates, the third slider 45 and the fourth slider 46 may be driven to move simultaneously toward the middle of the parking table 43, or simultaneously move away from the middle of the parking table 43, as shown in FIG. 9a and FIG. 9b. When the second lead screw 42 rotates clockwise (or counterclockwise), the third slider 45 and the fourth slider 46 may be extended synchronously, or when the second lead screw 42 rotates counterclockwise (or clockwise), the third slider 45 and the fourth slider 46 may be retracted synchronously.

Preferably, the third drive rod 421 and the fourth drive rod 422 are integrated; because a single lead screw connecting two sliders can ensure that the two sliders travel the same distance when the lead screw rotates, thereby ensuring accuracy of slider movement.

In one implementation, as shown in FIG. 9a and FIG. 9b, the second adjustment module 4 further includes:
a third slider 45, disposed on the third guide rail 471 and capable of sliding along the third guide rail 471; and
a fourth slider 46, disposed on the fourth guide rail 472 and capable of sliding along the fourth guide rail 472.

For extended and retracted states of the third slider 45 and the fourth slider 46, reference is made to FIG. 9a and FIG. 9b.

In the figure, a top height of the third slider 45 and the fourth slider 46 is greater than a top height of the parking table 43, so that the third slider 45 and the fourth slider 46 are less likely to support the unmanned aerial vehicle 1, and are suitable for adjusting the unmanned aerial vehicle 1 along two directions of the X-axis to center the unmanned aerial vehicle along the X-axis direction. After the unmanned aerial vehicle 1 is centered, the third slider 45 and the fourth slider 46 can also hold the unmanned aerial vehicle 1 on the parking table 43 along the X-axis direction.

A bottom shape of the third slider 45 needs to correspond to the third guide rail 471. For example, convex and concave shapes correspond to each other to form an engaging structure, so that the bottom of the third slider 45 is in slidable cooperation with the third guide rail 471 and cannot be arbitrarily detached from the third guide rail 471. A bottom shape of the fourth slider 46 needs to correspond to the fourth guide rail 472. For example, convex and concave shapes correspond to each other to form an engaging structure, so that the bottom of the fourth slider 46 is in slidable cooperation with the fourth guide rail 472 and cannot be arbitrarily detached from the fourth guide rail 472.

In one implementation, the third slider 45 is provided with a third threaded hole (not shown in the figure), and is connected to the third drive rod 421 of the second lead screw 42 through the third threaded hole.

The fourth slider 46 is provided with a fourth threaded hole (not shown in the figure), and is connected to the fourth drive rod 422 of the second lead screw 42 through the fourth threaded hole.

If the third drive rod 421 and the fourth drive rod 422 are configured with opposite thread directions, the third threaded hole and the fourth threaded hole also need to be configured with opposite thread directions.

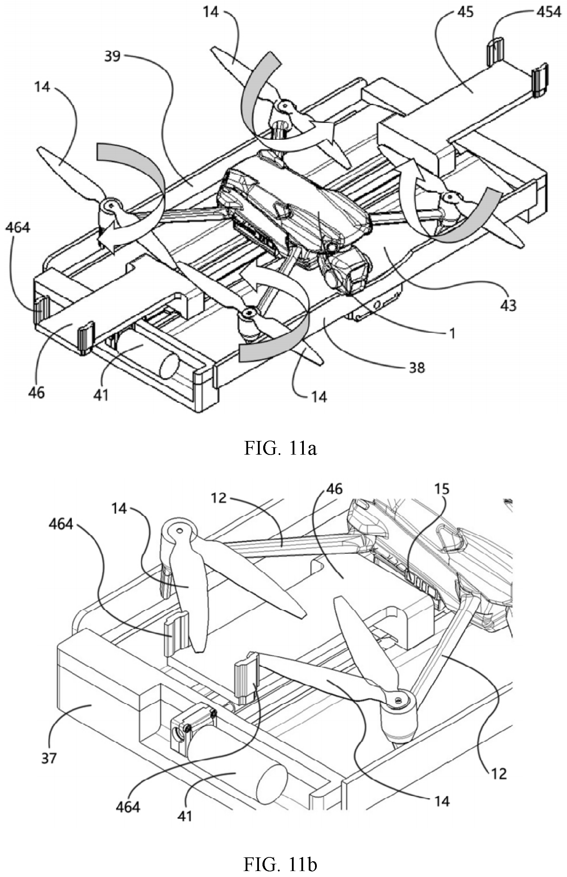

In one implementation, as shown in FIG. 11a and FIG. 11b, the top of the third slider 45 is provided with a plurality of first protrusions 454, where the first protrusion 454 is configured to fold a propeller blade 14 of the unmanned aerial vehicle 1.

The top of the fourth slider 46 is provided with a plurality of second protrusions 464, where the second protrusion 464 is configured to fold a propeller blade 14 of the unmanned aerial vehicle 1.

When the unmanned aerial vehicle 1 lands on the parking table 43, propeller blades 14 of the unmanned aerial vehicle 1 rotate at a low speed, and a direction of each propeller blade is shown in FIG. 11a. When the third slider 45 and the fourth slider 46 move toward the unmanned aerial vehicle 1, a first propeller blade hits a specific protrusion and stops rotating. When a second propeller blade reaches a dead point position of the two propeller blades, the second propeller blade stops rotating. A final stopping position of the two propeller blades is shown in FIG. 11b. The foregoing method achieves automatic retraction of the propeller blade 14 of the unmanned aerial vehicle 1 by using the low rotation speed of the unmanned aerial vehicle and a protrusion structure.

Outer surfaces of the first protrusion 454 and the second protrusion 464 are arc-shaped surfaces, and can come into contact with the propeller blade 14 of the unmanned aerial vehicle 1, causing no damage to the propeller blade 14. The low rotation speed and the protrusion structure of the unmanned aerial vehicle 1 are utilized to automatically retract propeller blade of the unmanned aerial vehicle with low costs, thereby reducing size of the unmanned aerial vehicle after being parked, and significantly save space of a vehicle or ship.

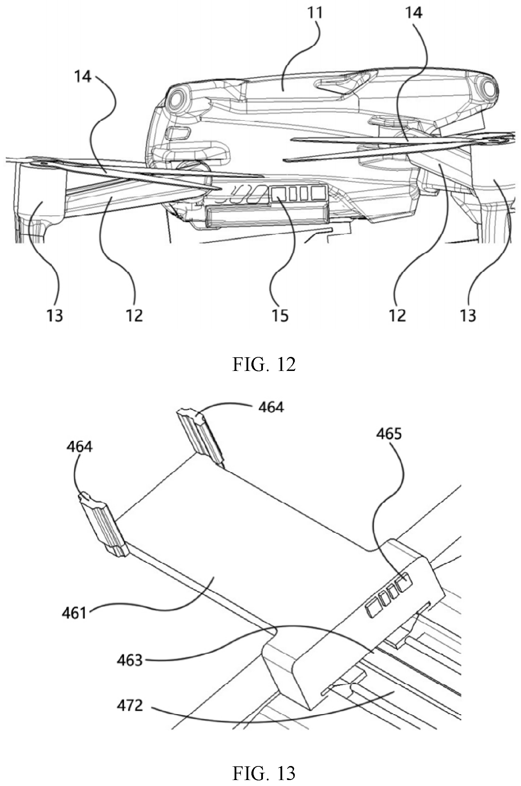

In one implementation, as shown in FIG. 12 and FIG. 13, an end of the third slider 45 is provided with a first charging terminal configured to electrically connect to a charging port 15 of the unmanned aerial vehicle 1 for charging; and/or
an end of the fourth slider 46 is provided with a second charging terminal 465 configured to electrically connect to the charging port 15 of the unmanned aerial vehicle 1 for charging.

One side or both sides of the body 11 of the unmanned aerial vehicle 1 are provided with the charging port 15. After the third slider 45 and the fourth slider 46 center the unmanned aerial vehicle along the X-axis direction, the third slider 45 and the fourth slider 46 are in contact with the body 11 of the unmanned aerial vehicle 1. In this case, the first charging terminal and/or the second charging terminal 465 may be used to charge the unmanned aerial vehicle 1 to supplement electric energy for the unmanned aerial vehicle 1. The third slider 45 or the fourth slider 46 or both need to be connected to a power supply, and the power supply may be a vehicle-mounted power supply or a battery (for example, a battery disposed in the base 2).

In one implementation, as shown in FIG. 5 and FIG. 6, the second adjustment module 4 further includes:
a cover 44, wherein the cover 44 is disposed at the top of the second mounting groove 431 to cover an opening of the second mounting groove 431. The cover 44 is overall H-shaped with a flat plate in the middle. Its two ends along the X-axis direction may be fastened to the first side base 36 and the second side base 37 respectively to achieve mounting and fastening. Through arrangement of the cover 44, the top of the parking table 43 may maintain a planar structure, to facilitate parking of the unmanned aerial vehicle 1. After being centered, the unmanned aerial vehicle 1 is mainly parked on the cover 44.

In an implementation, as shown in FIG. 5 and FIG. 6, a first sliding groove 453 is provided on the third slider 45, and the first sliding groove 453 is in slidable cooperation with the cover 44.

A second sliding groove 463 is provided on the fourth slider 46, and the second sliding groove 463 is in slidable cooperation with the cover 44.

Through arrangement of the first sliding groove 453, the third slider 45 can clear the cover 44 and be drivingly connected to the third drive rod 421, and the cover 44 may also be cleared in a sliding process. Through arrangement of the second sliding groove 463, the fourth slider 46 can clear the cover 44 and be drivingly connected to the fourth drive rod 422, and the cover 44 may also be cleared in a sliding process.

In the foregoing embodiments, the unmanned aerial vehicle hangar uses a lead screw-slider mechanism, to achieve two-degree-of-freedom composite movement of the slider through rotation of the lead screw, which may also be replaced with a rack and a pinion to achieve movement along a guide rail direction.

An embodiment of this application further provides a vehicle, including the unmanned aerial vehicle hangar according to any one of the foregoing embodiments.

The vehicle may be a car, a ship, an aircraft, or the like, but a type of the vehicle is not limited in this embodiment. The unmanned aerial vehicle hangar may be disposed on the top of a car, or the top of a ship, or the top of an aircraft, and is configured to receive an unmanned aerial vehicle 1. The unmanned aerial vehicle may land on the unmanned aerial vehicle hangar to perform operations such as parking and charging.

An unmanned aerial vehicle hangar and a vehicle in this application have the following characteristics:
1. The unmanned aerial vehicle hangar (parking pad) is equipped with a slope that gradually descends from the top to both ends, without requiring power to assist the unmanned aerial vehicle to land and automatically adjust its attitude. Compared with an existing unmanned aerial vehicle centering mechanism that requires a mechanical apparatus to control the unmanned aerial vehicle to adjust the attitude, this application has a more stable structure and lower costs, and the current automotive field has not applied such a structural form.
2. The unmanned aerial vehicle hangar (parking pad) is equipped with an unmanned aerial vehicle propeller blade retraction apparatus. Propeller blades of the unmanned aerial vehicle are automatically retracted by using a low speed of the unmanned aerial vehicle and the propeller blade retraction apparatus. Low-cost automatic retraction of propeller blades of the unmanned aerial vehicle reduces size of the unmanned aerial vehicle after being parked, saving car space, and currently, this structure form is not applied in the prior art.
3. Two sliding pads (retractable pads) are mounted on both sides of the unmanned aerial vehicle hangar (parking pad) to increase parking area for the unmanned aerial vehicle for landing and reduce parking area after the unmanned aerial vehicle is recovered. A size of the unmanned aerial vehicle hangar (parking pad) for landing is larger than that of an existing fixed parking pad, and a size of the unmanned aerial vehicle hangar (parking pad) after the unmanned aerial vehicle is recovered is smaller than the existing fixed parking pad. Compared with the existing fixed parking pad, the unmanned aerial vehicle hangar is more suitable for vehicle-mounted installation.
4. This application provides an unmanned aerial vehicle centering clamping mechanism with linkage of two lead screws and sliders, which has high transmission accuracy, and a stable and simple structure. Compared with the prior art, linkage of the two lead screws and the sliders is simple to control, and centering of the unmanned aerial vehicle has high precision. The two lead screws achieve movement of the sliders along four directions. The lead screw occupies a small volume of the unmanned aerial vehicle hangar.
5. The centering mechanism is arranged in the hangar, to hide the centering mechanism, and reduce a height of the unmanned aerial vehicle hangar.
6. The clamping sliders in this application come into contact with the body of the unmanned aerial vehicle to achieve automatic charging of the unmanned aerial vehicle. Compared with the existing unmanned aerial vehicle hangar, this application does not require manual battery change or charging after the unmanned aerial vehicle is returned, providing a more convenient user experience.

The procedures and steps described in all of the foregoing example implementations are merely examples. Unless adverse effect occurs, various processing operations may be performed in an order different from the order of the foregoing procedures. The steps of the foregoing procedures may also be added, merged, or removed as needed according to actual requirements.

In understanding the scope of this application, the term "include" and its derivatives as used herein are intended to be open-ended terms that specify the presence of the described features, elements, components, groups, wholes, and/or steps, but do not exclude the presence of other undocumented features, elements, components, groups, wholes and/or steps. This concept also applies to terms having similar meanings, such as the terms "comprise", "have", and their derivatives.

The term "attached" or "attaching" used herein includes: a structure in which an element is directly fastened to another element to fasten the element to another element; a structure in which an element is fastened to an intermediate member, the intermediate member is in turn fastened to another element, to indirectly fasten the element to another element; and a structure in which one element and another element are integrated, that is, one element is substantially a part of another element. This definition also applies to words having similar meanings, such as "connect", "join", "couple", "mount", "bond", "fasten" and their derivatives. Finally, the degree terms such as "substantially," "approximately", and "roughly" used herein represent an amount of deviation from which modifying the terms would not significantly change the final result.

Unless otherwise defined, technical and scientific terms used in this specification have same meanings as those usually understood by those skilled in the art of this application. The terms used in this specification are merely intended to describe specific embodiments, and are not intended to limit this application. A feature described in one implementation in this specification may be applied to another implementation alone or in combination with another feature, unless the feature is not applicable in another implementation or otherwise specified.

This application is described with the foregoing implementations, but it will be understood that the foregoing implementations are merely for purposes of illustration and description, and are not intended to limit this application to the scope of the described implementations. In addition, those skilled in the art will understand that, this application is not limited to the foregoing implementations, and more variations and modifications may be made according to teachings of this application, and all these variations and modifications fall within the protection scope claimed in this application.

## Claims

1. An unmanned aerial vehicle hangar for receiving an unmanned aerial vehicle (1), comprising:
a first adjustment module (3), configured to support the unmanned aerial vehicle (1) and capable of adjusting the unmanned aerial vehicle (1) along a Y-axis direction, wherein the first adjustment module (3) comprises a first sliding pad (38) and a second sliding pad (39); and
a parking table (43), configured to park the unmanned aerial vehicle (1), the parking table (43) being disposed between the first sliding pad (38) and the second sliding pad (39), wherein
the first sliding pad (38) and the second sliding pad (39) are capable of moving in the Y-axis direction synchronously with respect to the parking table (43), to adjust the unmanned aerial vehicle (1) to the middle of the parking table (43).

2. The unmanned aerial vehicle hangar according to claim 1, wherein the first sliding pad (38) and the second sliding pad (39) are disposed below the parking table (43), and are capable of moving in the Y-axis direction below the parking table (43).

3. The unmanned aerial vehicle hangar according to claim 2, wherein heights of the first sliding pad (38) and the second sliding pad (39) with respect to the parking table (43) are different, to avoid interference between the first sliding pad (38) and the second sliding pad (39) during movement.

4. The unmanned aerial vehicle hangar according to claim 1, wherein the parking table (43) comprises: a first guide surface (432) and a second guide surface (433), the first guide surface (432) and the second guide surface (433) are disposed on both sides of the parking table (43), the first guide surface (432) is close to the first sliding pad (38), the second guide surface (433) is close to the second sliding pad (39), the first guide surface (432) and the second guide surface (433) are arranged as inclined planes, heights of which gradually decrease toward two sides of the parking table (43).

5. The unmanned aerial vehicle hangar according to claim 1, further comprising:
a base (2), wherein the first adjustment module (3) is disposed on top of the base (2).

6. The unmanned aerial vehicle hangar according to claim 5, wherein the first adjustment module (3) further comprises:
a first side base (36), disposed on one side of the base (2) along an X-axis direction, wherein the first sliding pad (38) and the second sliding pad (39) are slidably disposed on the first side base (36); and
a second side base (37), disposed on the other side of the base (2) along an X-axis direction, wherein the first sliding pad (38) and the second sliding pad (39) are slidably disposed on the second side base (37); and
two ends of the parking table (43) along the X-axis direction are respectively fastened to the first side base (36) and the second side base (37).

7. The unmanned aerial vehicle hangar according to claim 6, wherein a first guide groove (361) and a second guide groove (362) are provided on an inner side of the first side base (36), and a third guide groove (371) and a fourth guide groove (372) are provided on an inner side of the second side base (37); and the first guide groove (361) and the third guide groove (371) are arranged to correspond to each other, and the second guide groove (362) and the fourth guide groove (372) are arranged to correspond to each other; and
two side edges of the first sliding pad (38) are in slidable cooperation with the first guide groove (361) and the third guide groove (371), respectively, and two side edges of the second sliding pad (39) are in slidable cooperation with the second guide groove (362) and the fourth guide groove (372), respectively.

8. The unmanned aerial vehicle hangar according to claim 5, wherein a first mounting groove (22) is provided on the top of the base (2), and the first mounting groove (22) is provided along the Y-axis direction; and
the first adjustment module (3) further comprises a first guide rail module (33), and the first guide rail module (33) is disposed in the first mounting groove (22), and is configured to guide sliding of the first sliding pad (38) and the second sliding pad (39).

9. The unmanned aerial vehicle hangar according to claim 8, wherein the first adjustment module (3) further comprises:
a first drive module, wherein the first drive module is drivingly connected to both the first sliding pad (38) and the second sliding pad (39), and is capable of driving the first sliding pad (38) and the second sliding pad (39) to move synchronously along the Y-axis direction with respect to the parking table (43).

10. The unmanned aerial vehicle hangar according to claim 9, wherein the first drive module comprises:
a first drive apparatus (31), disposed on the top of the base (2) and located in the middle of the first mounting groove (22); and
a first lead screw (32), drivingly connected to the first drive apparatus (31), wherein the first lead screw (32) comprises a first drive rod (321) and a second drive rod (322), with thread directions of the first drive rod (321) and the second drive rod (322) being opposite; and
the first guide rail module (33) comprises a first guide rail (331) and a second guide rail (332), the first guide rail (331) and the second guide rail (332) are distributed on both sides of the first drive apparatus (31) along the Y-axis direction, the first guide rail (331) is arranged to correspond to the first drive rod (321), and the second guide rail (332) is arranged to correspond to the second drive rod (322).

11. The unmanned aerial vehicle hangar according to claim 10, wherein the first drive module further comprises:
a first slider (34), wherein the first slider (34) is disposed on the first guide rail (331) and is capable of sliding along the first guide rail (331), and the first slider (34) is connected to the first sliding pad (38); and
a second slider (35), wherein the second slider (35) is disposed on the second guide rail (332) and is capable of sliding along the second guide rail (332), and the second slider (35) is connected to the second sliding pad (39).

12. The unmanned aerial vehicle hangar according to claim 11, wherein the first slider (34) is provided with a first threaded hole (342), and is connected to the first drive rod (321) of the first lead screw (32) through the first threaded hole (342);
the second slider (35) is provided with a second threaded hole (352), and is connected to the second drive rod (322) of the first lead screw (32) through the second threaded hole (352); and
thread directions of the first threaded hole (342) and the second threaded hole (352) are opposite.

13. The unmanned aerial vehicle hangar according to claim 1, wherein the first sliding pad (38) is provided with a first protruding edge (382), and the first protruding edge (382) pushes the unmanned aerial vehicle (1) to move or limit the unmanned aerial vehicle (1); and
the second sliding pad (39) is provided with a second protruding edge (392), and the second protruding edge (392) pushes the unmanned aerial vehicle (1) to move or limit the unmanned aerial vehicle (1).

14. The unmanned aerial vehicle hangar according to claim 1, further comprising:
a second adjustment module (4), configured to adjust the unmanned aerial vehicle (1) along an X-axis direction, wherein the second adjustment module (4) is capable of holding the unmanned aerial vehicle (1) on the parking table (43), and the second adjustment module (4) is disposed on top of the parking table (43); and
the second adjustment module (4) comprises a third slider (45) and a fourth slider (46), wherein the third slider (45) and the fourth slider (46) are capable of moving synchronously along the X-axis direction with respect to the parking table (43).

15. The unmanned aerial vehicle hangar according to claim 14, wherein a second mounting groove (431) is provided on the top of the parking table (43), and the second mounting groove (431) is disposed along the X-axis direction; and
the second adjustment module (4) further comprises a second guide rail module (47), and the second guide rail module (47) is disposed in the second mounting groove (431).

16. The unmanned aerial vehicle hangar according to claim 15, wherein the second adjustment module (4) further comprises:
a second drive module, wherein the second drive module is drivingly connected to both the third slider (45) and the fourth slider (46), and is capable of driving the third slider (45) and the fourth slider (46) to move synchronously along the X-axis direction with respect to the parking table (43).

17. The unmanned aerial vehicle hangar according to claim 16, wherein the second adjustment module (4) further comprises:
a second drive apparatus (41), wherein the second drive apparatus (41) is disposed on one side of the parking table (43); and
a second lead screw (42), drivingly connected to the second drive apparatus (41), wherein the second lead screw (42) comprises a third drive rod (421) and a fourth drive rod (422), with thread directions of the third drive rod (421) and the fourth drive rod (422) being opposite; and
the second guide rail module (47) comprises a third guide rail (471) and a fourth guide rail (472), the third guide rail (471) and the fourth guide rail (472) are distributed along the X-axis direction, the third guide rail (471) is arranged to correspond to the third drive rod (421), and the fourth guide rail (472) is arranged to correspond to the fourth drive rod (422).

18. The unmanned aerial vehicle hangar according to claim 17, wherein the third slider (45) is disposed on the third guide rail (471), and is capable of sliding along the third guide rail (471); and
the fourth slider (46) is disposed on the fourth guide rail (472), and is capable of sliding along the fourth guide rail (472).

19. The unmanned aerial vehicle hangar according to claim 17, wherein the third slider (45) is provided with a third threaded hole, and is connected to the third drive rod (421) of the second lead screw (42) through the third threaded hole;
the fourth slider (46) is provided with a fourth threaded hole, and is connected to the fourth drive rod (422) of the second lead screw (42) through the fourth threaded hole; and
thread directions of the third threaded hole and the fourth threaded hole are opposite.

20. The unmanned aerial vehicle hangar according to claim 14, wherein a top of the third slider (45) is provided with a plurality of first protrusions (454), wherein the first protrusion (454) is configured to fold a propeller blade (14) of the unmanned aerial vehicle (1); and
a top of the fourth slider (46) is provided with a plurality of second protrusions (464), wherein the second protrusion (464) is configured to fold a propeller blade (14) of the unmanned aerial vehicle (1).

21. The unmanned aerial vehicle hangar according to claim 14, wherein an end of the third slider (45) is provided with a first charging terminal configured to electrically connect to a charging port (15) of the unmanned aerial vehicle (1) for charging; and/or
an end of the fourth slider (46) is provided with a second charging terminal (465) configured to electrically connect to the charging port (15) of the unmanned aerial vehicle (1) for charging.

22. The unmanned aerial vehicle hangar according to claim 15, wherein the second adjustment module (4) further comprises:
a cover (44), wherein the cover (44) is disposed at a top of the second mounting groove (431) to cover an opening of the second mounting groove (431).

23. The unmanned aerial vehicle hangar according to claim 22, wherein a first sliding groove (453) is provided on the third slider (45), and the first sliding groove (453) is in slidable cooperation with the cover (44); and
a second sliding groove (463) is provided on the fourth slider (46), and the second sliding groove (463) is in slidable cooperation with the cover (44).

24. A vehicle, comprising the unmanned aerial vehicle hangar according to any one of claims 1 to 23.
